(19) Europäisches Patentamt European Patent Office Office européen des brevets

(11) **EP 1 511 965 B1**

(12) **FASCICULE DE BREVET EUROPEEN**

(45) Date de publication et mention de la délivrance du brevet:
**12.03.2008 Bulletin 2008/11**

(21) Numéro de dépôt: **03755167.8**

(22) Date de dépôt: **16.05.2003**

(51) Int Cl.:
*F25B 49/02* (2006.01)   *F25B 1/04* (2006.01)

(86) Numéro de dépôt international:
**PCT/FR2003/001501**

(87) Numéro de publication internationale:
**WO 2003/100332 (04.12.2003 Gazette 2003/49)**

(54) **PROCEDE ET INSTALLATION DE PILOTAGE D AU MOINS UN COMPRESSEU R CENTRIFUGE CRYOGENIQUE, LIGNE DE COMPRESSION**

VERFAHREN UND ANLAGE ZUM STEUERN MINDESTENS EINES KRYOGENEN ZENTRIFUGALKOMPRESSORS, DRUCKLEITUNG

METHOD AND INSTALLATION FOR CONTROLLING AT LEAST ONE CRYOGENIC CENTRIFUGAL COMPRESSOR, COMPRESSION LINE

(84) Etats contractants désignés:
**CH DE FR LI**

(30) Priorité: **24.05.2002 FR 0206326**

(43) Date de publication de la demande:
**09.03.2005 Bulletin 2005/10**

(73) Titulaire: **L'AIR LIQUIDE, Société Anonyme pour l'Etude
et l'Exploitation des Procédés Georges Claude
75007 Paris (FR)**

(72) Inventeur: **GISTAU-BAGUER, Guy
F-38330 Bivier (FR)**

(74) Mandataire: **Le Moenner, Gabriel
L'AIR LIQUIDE S.A.,
Service Propriété Industrielle,
75, quai d'Orsay
75321 Paris Cédex 07 (FR)**

(56) Documents cités:
**FR-A- 2 679 635        FR-A- 2 760 074
US-A- 5 499 505**

Printed by Jouve, 75001 PARIS (FR)

## Description

La présente invention concerne un procédé et une installation de pilotage d'au moins un compresseur centrifuge cryogénique, ainsi qu'une ligne de compression et une installation de réfrigération correspondantes.

L'invention s'applique par exemple au refroidissement des éléments supraconducteurs d'accélérateurs de particules.

Les pressions dont il est question ici sont des pressions absolues.

Le refroidissement des éléments supraconducteurs d'accélérateurs de particules nécessite l'utilisation d'un fluide en équilibre à basse température et à basse pression, notamment de l'hélium, dont la vaporisation assure les transferts de chaleur nécessaires.

Les installations de réfrigération utilisées dans ces applications comprennent des unités de liquéfaction capables, à partir d'hélium gazeux à la pression atmosphérique, et à la température ambiante, de fournir de l'hélium liquide en équilibre avec sa phase gazeuse à des températures de l'ordre de 2 K et à des pressions de l'ordre de 30 mbar.

La puissance dissipée par les éléments supraconducteurs vaporise de l'hélium, qui doit être recomprimé pour être réintroduit dans l'unité de liquéfaction, dont la pression d'entrée est imposée à une valeur de l'ordre de la pression atmosphérique. Le rôle de la ligne de compression est de contrôler sa propre pression d'admission et donc la température de l'hélium liquide.

Actuellement, seules les lignes de compression à compresseurs centrifuges en série permettent de comprimer, au taux de compression souhaité, un débit suffisant pour obtenir des moyennes ou fortes puissances de réfrigération. Les compresseurs centrifuges sont alors dimensionnés pour assurer le taux de compression souhaité pour le débit massique nominal en hélium gazeux vaporisé par les éléments supraconducteurs fonctionnant à plein régime.

Lors du démarrage, des périodes d'attente, ou encore d'un fonctionnement des éléments supraconducteurs à régime réduit, les besoins en refroidissement diminuent, ce qui s'accompagne d'une réduction correspondante du débit massique d'hélium gazeux vaporisé et introduit dans la ligne de compression. Cette diminution du débit massique est susceptible d'entraîner un décrochage des compresseurs, qui doivent assurer un taux de compression constant.

Dans le cas de compresseurs fonctionnant à la température ambiante, le problème précité est résolu de façon simple, en adaptant le débit de chaque compresseur. A cet effet, chaque étage de compression est muni d'une ligne de recyclage, permettant d'augmenter le débit massique de chaque compresseur, et donc d'en éviter le décrochage.

Cette solution ne peut cependant pas être adaptée à des compresseurs cryogéniques montés en série car la solution consistant à recycler du gaz entre chaque étage de compression afin d'adapter le point de fonctionnement de chaque compresseur nécessiterait des refroidissements intermédiaires, s'avérerait particulièrement complexe à mettre en oeuvre et prélèverait de la puissance frigorifique sur le réfrigérateur.

De tels compresseurs cryogéniques sont également soumis à des contingences spécifiques, qui doivent être prises en compte en vue de leur pilotage.

Ainsi, étant donné qu'il s'agit d'un système cryogénique, la température de chacun des étages de compression est variable.

En outre, étant donné que le débit traité par les compresseurs est renvoyé vers un réfrigérateur, celui-ci impose une limitation de débit, correspondant au débit qui lui est acceptable.

De plus, le processus de pilotage n'est pas lié au temps. En effet, le débit de gaz à traiter provient de l'évaporation d'une partie du liquide, pour laquelle on provoque une diminution de pression, ce débit étant obtenu en faisant varier de façon judicieuse la pression d'aspiration du premier étage de compression.

Une telle variation est liée aux différents paramètres du liquide, sur lequel s'effectue le pompage, à savoir notamment la quantité, l'état de surchauffe, ou encore la puissance résiduelle dissipée dans ce liquide.

Ceci étant posé, l'invention vise à proposer un procédé assurant un pilotage fiable d'au moins un compresseur cryogénique centrifuge, qui permette en particulier d'amener à tout instant chaque compresseur vers un état stable, qui peut cependant être différent de son état nominal.

A cet effet, elle a pour objet un procédé de pilotage d'une ligne de compression comprenant au moins un compresseur centrifuge cryogénique, ladite ligne étant notamment apte à comprimer un gaz initialement à basse température et à basse pression, en particulier de l'hélium, provenant d'une capacité, procédé dans lequel on pilote la vitesse de rotation du ou de chaque compresseur, caractérisé en ce qu'il comprend les étapes suivantes :

- on choisit une courbe prédéterminée, pouvant être représentée sous forme d'un premier paramètre représentatif de la vitesse de rotation d'un compresseur, en fonction d'un second paramètre, représentatif du débit massique dudit compresseur ;

- on régule la vitesse de rotation du compresseur centrifuge cryogénique disposé le plus en aval de la ligne de compression en fonction des valeurs relatives, d'une part, de la pression instantanée à l'aspiration du compresseur centrifuge cryogénique situé le plus en amont de la ligne de compression et, d'autre part, d'une pression de consigne variable; et

- on régule la pression de consigne variable en fonction de la valeur du rapport entre, d'une part, la valeur instantanée, pour le compresseur aval, du premier paramètre représentatif de la vitesse de rotation du compresseur et, d'autre part, la valeur théorique de ce premier paramètre, située sur ladite courbe prédéterminée, qui correspond à la valeur instantanée, pour ce compresseur aval, du second paramètre représentatif du débit massique.

Selon d'autres caractéristiques de l'invention :

- le paramètre représentatif de la vitesse de rotation est la vitesse réduite-réduite.
- le paramètre représentatif du débit massique est le débit réduit-réduit.
- dans une représentation faisant intervenir le taux de compression en fonction du débit réduit-réduit, la courbe prédéterminée définit une seconde courbe prédéterminée qui se situe à droite d'une courbe de décrochage du compresseur.
- la seconde courbe prédéterminée passe par le point de fonctionnement nominal.
- la distance séparant, pour un taux de compression donné, la seconde courbe prédéterminée et la courbe de décrochage est proportionnelle à la valeur du taux de compression.
- on régule la pression de consigne variable en régulant un coefficient d'atténuation, et en multipliant ce coefficient d'atténuation par une valeur fixe, afin d'obtenir ladite pression de consigne variable.
- la valeur fixe est égale à une valeur de pression désirée à l'aspiration du compresseur amont, notamment 30 mbar.
- on augmente la pression de consigne variable lorsque la valeur instantanée, pour le compresseur aval, du paramètre représentatif de la vitesse de rotation est inférieure à la valeur théorique.
- on augmente la vitesse de rotation du compresseur centrifuge cryogénique aval, lorsque la pression instantanée à l'aspiration du compresseur centrifuge cryogénique amont est supérieure à la pression de consigne variable.
- il est prévu un compresseur aval et au moins un autre compresseur et on affecte, au ou à chaque autre compresseur, une vitesse de rotation correspondant à la valeur théorique, pour chaque autre compresseur, du premier paramètre représentatif de la vitesse de rotation, cette valeur étant située sur la courbe prédéterminée et correspondant à la valeur instantanée du second paramètre, représentatif du débit massique.
- il est prévu un compresseur aval et au moins un autre compresseur et on affecte, au ou à chaque autre compresseur aval, au moins pendant une phase de démarrage de celui-ci, une vitesse de rotation correspondant au produit de la vitesse de rotation du compresseur aval, par un coefficient prédéterminé.
- après que le ou chaque compresseur centrifuge cryogénique a atteint son régime nominal, on fournit de l'énergie, notamment électrique, dans la capacité, lorsque la distance entre un point de fonctionnement instantané et la courbe de décrochage devient inférieure à une valeur minimale prédéterminée.
- on recycle une fraction de gaz de l'aval vers l'amont de la ligne de compression, par un conduit de recyclage, on mesure le débit effectivement envoyé en aval de ce conduit, en particulier vers une unité de liquéfaction de ce gaz, et on régule l'écoulement de gaz dans le conduit de recyclage en fonction des valeurs relatives, d'une part, du débit effectivement envoyé en aval de la ligne de compression et, d'autre part, d'un débit seuil, qui correspond en particulier à un débit acceptable par cette unité de liquéfaction.
- on injecte du gaz d'appoint à une température sensiblement plus élevée que celle du gaz circulant dans la ligne de compression, en particulier à la température ambiante, et on régule l'injection de ce gaz d'appoint en fonction des valeurs relatives, d'une part, du débit de gaz circulant en aval de la ligne de compression et, d'autre part, d'un débit seuil, correspondant en particulier à un débit acceptable par une unité de liquéfaction de ce gaz.

L'invention a également pour objet une installation de pilotage d'une ligne de compression comprenant au moins un compresseur centrifuge cryogénique, pour la mise en oeuvre du procédé tel que défini ci-dessus, caractérisée en ce qu'elle comprend :

- des premiers moyens de régulation, aptes à réguler la vitesse de rotation du compresseur centrifuge cryogénique disposé en aval de la ligne de compression, en fonction des valeurs relatives, d'une part, de la pression instantanée à l'aspiration du compresseur centrifuge cryogénique situé en amont de la ligne de compression et, d'autre part, d'une pression de consigne variable ; et
- des seconds moyens de régulation, aptes à réguler la pression de consigne variable en fonction de la valeur du rapport entre, d'une part, la valeur instantanée, pour le compresseur aval, du premier paramètre de la courbe prédéterminée, représentatif de la vitesse de rotation du compresseur et, d'autre part, la valeur théorique de ce premier paramètre, située sur cette courbe prédéterminée, qui correspond à la valeur instantanée, pour le compresseur aval, du second paramètre de cette courbe prédéterminée, représentatif du débit massique du compresseur.

Selon d'autres caractéristiques de l'invention .

- les moyens de régulation de la vitesse comprennent une première boucle de régulation qui possède une consigne égale à la pression de consigne variable, une mesure égale à la pression à l'aspiration du compresseur centrifuge cryogénique amont, ainsi qu'une sortie apte à réguler la vitesse du compresseur centrifuge cryogénique aval.
- les moyens de régulation de la pression de consigne variable comprennent une seconde boucle de régulation, possédant une consigne égale à 1, une mesure égale au rapport entre les valeurs instantanée et théorique du premier paramètre, ainsi qu'une sortie apte à modifier la valeur de cette pression de consigne variable.
- la sortie de la seconde boucle de régulation débouche dans un module de multiplication, apte à multiplier la valeur de cette sortie par une valeur fixe.
- cette valeur fixe est égale à une valeur de pression désirée à l'aspiration du compresseur amont, notamment 30 mbar.
- l'installation comprend en outre au moins un module de calcul apte à calculer à chaque instant, pour le ou chaque compresseur, les valeurs instantanée et théorique du premier paramètre, représentatif de la vitesse de rotation, ainsi que la valeur instantanée du second paramètre, représentatif du débit massique.
- l'installation comprend des moyens aptes à fournir de l'énergie, notamment électrique, à la capacité, lorsque la distance entre le point de fonctionnement et la courbe de décrochage devient inférieure à une valeur minimale prédéterminée.
- l'installation comprend une boucle de régulation de l'énergie, possédant une consigne égale à ladite valeur minimale prédéterminée, une mesure mise en relation avec un autre module de calcul, apte à calculer à chaque instant la distance entre le point de fonctionnement et la courbe de décrochage, ainsi qu'une sortie en relation avec les moyens de fourniture d'énergie.
- l'installation comprend un conduit de recyclage, apte à recycler une fraction de gaz de l'aval vers l'amont de la ligne de compression, ainsi que des moyens de régulation de débit, aptes à réguler l'écoulement de gaz dans ce conduit de recyclage en fonction des valeurs relatives, d'une part, du débit effectivement envoyé en aval de la ligne de compression et, d'autre part, d'un débit seuil.
- les moyens de régulation de débit comprennent une boucle de régulation du débit recyclé possédant une consigne égale au débit seuil, une mesure correspondant à la valeur instantanée du débit effectivement envoyé en aval de la ligne de compression, ainsi qu'une sortie mise en communication avec un organe d'ouverture-fermeture, en particulier une vanne, dont est muni le conduit de recyclage.
- l'installation comprend un conduit d'injection d'un gaz d'appoint à une température sensiblement plus élevée que celle du gaz circulant dans la ligne de compression, en particulier à la température ambiante, ainsi que des moyens de régulation de l'injection, aptes à réguler l'injection de ce gaz d'appoint en fonction des valeurs relatives, d'une part, du débit de gaz circulant en aval de la ligne de compression et, d'autre part, d'un débit seuil.
- les moyens de régulation de l'injection comprennent une boucle de régulation de l'injection possédant une consigne égale à la valeur du débit seuil, une mesure égale à la valeur instantanée du débit de gaz circulant en aval de la ligne de compression, ainsi qu'une sortie mise en relation avec un organe d'ouverture-fermeture, en particulier une vanne, dont est muni le conduit d'injection.

L'invention a également pour objet une ligne de compression, comprenant au moins un compresseur cryogénique centrifuge, ainsi qu'une installation de pilotage du ou de chaque compresseur, caractérisée en ce que cette installation de pilotage est telle que définie ci-dessus.

L'invention a enfin pour objet une installation de réfrigération par vaporisation d'un gaz liquéfié à basse pression et basse température, notamment d'hélium, comprenant une capacité contenant le fluide diphasique à basse température et à basse pression, une unité de liquéfaction dudit gaz, une ligne d'alimentation en fluide diphasique à basse température et à basse pression, munie de moyens de détente de ce gaz liquéfié, reliant l'unité de liquéfaction à la capacité, et une ligne de compression de la phase gazeuse reliant la capacité à l'unité de liquéfaction, caractérisée en ce que la ligne de compression est telle que définie ci-dessus.

L'invention sera mieux comprise à la lecture de la description qui va suivre, donnée uniquement à titre d'exemple non limitatif, et faite en se référant aux dessins annexés, dans lesquels :

- la figure 1 est une vue schématique, illustrant un train de compresseurs centrifuges cryogéniques ;
- la figure 2 est un graphe représentant le champ de compression d'un de ces compresseurs centrifuges cryogéniques ;
- la figure 3 est un graphe illustrant un comportement optimal, au sens de l'invention, d'un compresseur centrifuge cryogénique ;
- la figure 4 est une vue schématique représentant une installation, conforme à l'invention, permettant le pilotage du train de compresseurs illustré à la figure 1 ;
- les figures 5 à 8 sont des vues schématiques analogues à celles de la figure 4, représentant des variantes de réalisation de l'installation de pilotage conforme à l'invention ; et
- la figure 9 est une vue schématique, analogue à la figure 1, illustrant une variante supplémentaire de réalisation de l'invention.

EP 1 511 965 B1

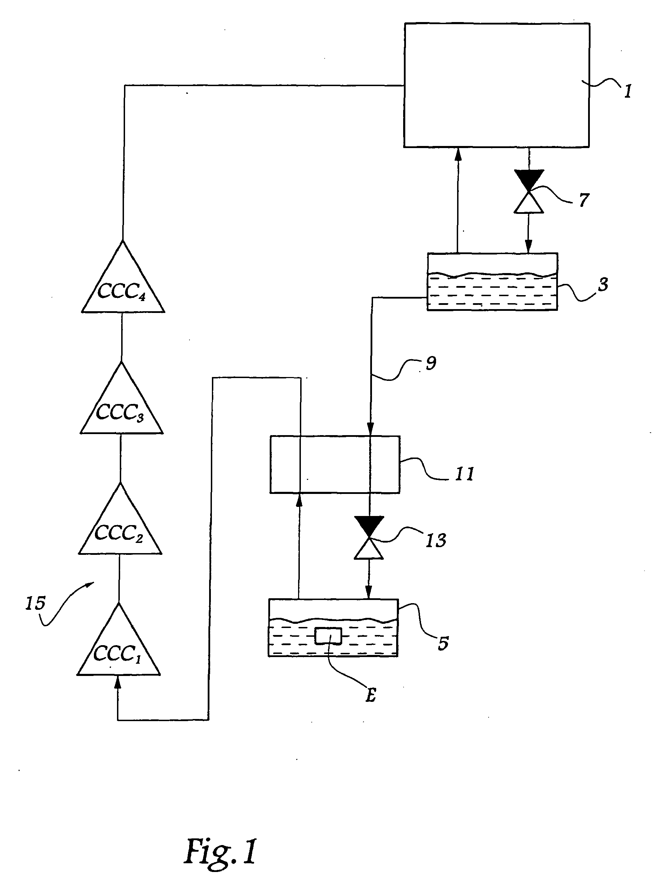

La figure 1 représente une installation de réfrigération par l'hélium liquide, utilisée par exemple pour le refroidissement d'éléments supraconducteurs d'accélérateurs de particules.

Cette installation comprend une unité 1 de liquéfaction d'hélium, ou réfrigérateur, comprenant des compresseurs, des échangeurs de chaleur et des moyens de détente, non représentés. Il est par ailleurs prévu une première capacité 3 de stockage de l'hélium liquide en équilibre avec sa phase gazeuse, et une deuxième capacité 5 de stockage de l'hélium liquide en équilibre avec sa phase gazeuse, qui assure les échanges de chaleur avec l'élément E à réfrigérer.

L'unité 1 de liquéfaction d'hélium délivre, après détente dans une vanne de détente 7, de l'hélium liquide en équilibre avec sa phase gazeuse dans la première capacité 3. En fonctionnement, l'hélium est alors à une température d'environ 4,4 K et à une pression d'environ 1,2 bar.

Le liquide de la première capacité 3 est extrait par une ligne 9, refroidi dans un échangeur de chaleur 11, puis détendu dans une vanne de détente 13 avant d'être introduit en équilibre avec sa phase gazeuse dans la deuxième capacité 5. En fonctionnement, l'hélium doit être, dans cette capacité, à une température d'environ 2 K et à une pression d'environ 31,3 mbar (ou hPa).

Le ciel gazeux de la deuxième capacité 5 est aspiré, après chauffage à contre-courant dans l'échangeur 11, dans une ligne de compression 15 qui restitue l'hélium gazeux à l'unité 1 de liquéfaction.

La pression de refoulement de la ligne de compression est imposée par l'unité 1 de liquéfaction à une valeur d'environ 1,15 bar. La ligne de compression permet, en fonctionnement, d'abaisser la pression d'équilibre et donc la température d'équilibre de l'hélium dans la deuxième capacité 5 à la valeur désirée.

Une telle installation de réfrigération est décrite dans les documents FR-A-2 679 635 et US-A-5 499 505.

La ligne de compression illustrée sur la figure 1, comporte quatre compresseurs centrifuges cryogéniques montés en série, qui sont affectés des références $CCC_1$ à $CCC_4$.

Pour décrire plus facilement le fonctionnement des compresseurs, les paramètres suivants seront utilisés :

- le débit « réduit » d'un compresseur :

$$Y = D * \sqrt{T/P}$$

- la vitesse « réduite » d'un compresseur :

$$n = N/\sqrt{T}$$

où D est le débit massique traversant le compresseur, T la température d'admission du compresseur, P la pression d'admission du compresseur et N la vitesse de rotation du compresseur,

- le débit « réduit-réduit », ou « réduit-normé », d'un compresseur :

$$X = Y/Y_N$$

- et la vitesse « réduite-réduite », ou « réduite-normée », d'un compresseur :

$$NU = n/n_N$$

où $Y_N$ est le débit « réduit » nominal du compresseur, c'est-à-dire dans des conditions de fonctionnement correspondant à celles de son dimensionnement, et $n_N$ est la vitesse « réduite » nominale du compresseur, c'est-à-dire dans des conditions de fonctionnement correspondant à celles de son dimensionnement.

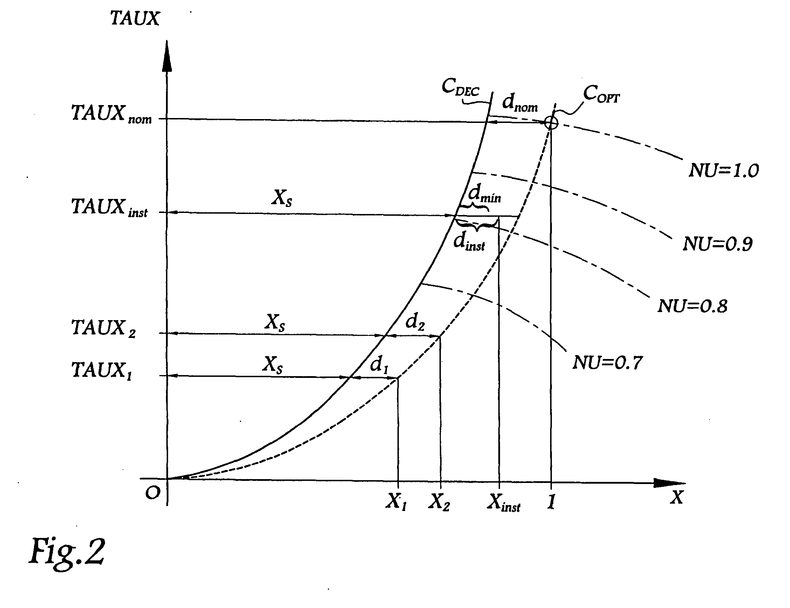

Le graphe de la figure 2 représente le champ de compression d'un compresseur centrifuge dans un plan débit « réduit-réduit »/taux de compression.

La courbe $C_{DEC}$ de décrochage dans les aubes de roue, représentée en traits pleins, sépare le champ de compression du compresseur en une zone de fonctionnement stable à droite de la courbe de décrochage, et en une zone de fonctionnement instable à gauche de la courbe de décrochage.

Grâce à l'utilisation des variables « réduites-réduites », cette courbe $C_{DEC}$ permet d'une part d'étudier le fonctionnement d'un compresseur dans des conditions autres que celles définies pour le régime nominal, et d'autre part de comparer le fonctionnement de compresseurs différents, qui n'ont pas nécessairement des champs identiques.

En référence au graphe de la figure 2, on définit un chemin optimal, que chaque compresseur est censé suivre, grâce au procédé de pilotage de l'invention.

Ce chemin optimal $C_{OPT}$, qui est illustré en traits pointillés, se situe à droite de la courbe de décrochage. Il passe par le point $(Taux_{NOM} ; 1)$, matérialisé par un cercle qui correspond à un point de fonctionnement nominal, par exemple défini par l'opérateur.

Ce chemin optimal est le lieu, passant par le point $(Taux_{NOM} ; 1)$ précité, des points de fonctionnement situés à une distance « analogue », ou « proportionnelle », de la courbe de décrochage. Ceci signifie que la distance entre le point de fonctionnement du compresseur et la courbe de décrochage, qui est proportionnelle au taux de compression, est définie par le même rapport $(X - X_S)/X_S$ sur le champ de chaque compresseur, ce rapport étant encore appelé coefficient de distance.

Dans ces conditions, étant donné que la sensibilité au décrochage augmente avec le taux de compression, la distance séparant la courbe de décrochage du chemin optimal, à taux de compression constant, est définie ainsi :

$$((X - X_S)/X_S) \; \times \; (Taux/Taux_{NOM}).$$

Cette distance varie de 0 pour un taux de compression de 1, à sa valeur maximale $d_{NOM}$, correspondant au taux de compression nominal $Taux_{NOM}$. En se référant à la figure 2, elle est ainsi égale à $d_1 = (X_1 - X_S/X_S) * (Taux_1/Taux_{NOM})$, ainsi qu' à $d_2 = (X_2 - X_S/X_S) * (Taux_2/Taux_{NOM})$, pour des points respectifs $X_1$ et $X_2$ donnés.

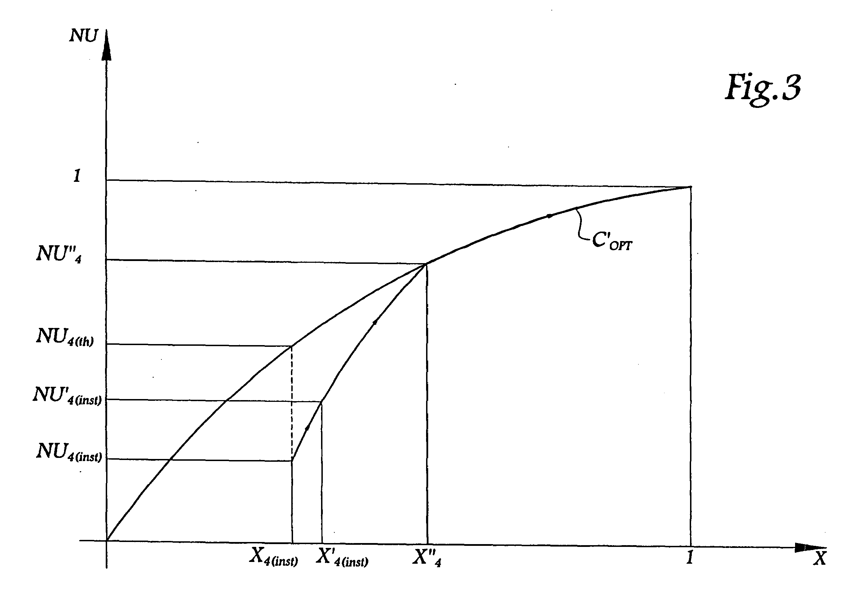

Comme le montre la figure 3, le chemin optimal $C_{OPT}$ de la figure 2 peut être illustré sous la forme d'un autre graphe. Sur ce dernier, le débit réduit-réduit X est porté en abscisses, alors que la vitesse réduite-réduite NU est portée en ordonnées.

Ce chemin optimal $C'_{OPT}$, dans sa forme $NU = f(X)$, varie du point $(0 ; 0)$ correspondant à un compresseur au repos, au point $(1 ; 1)$ qui correspond au fonctionnement nominal de ce compresseur.

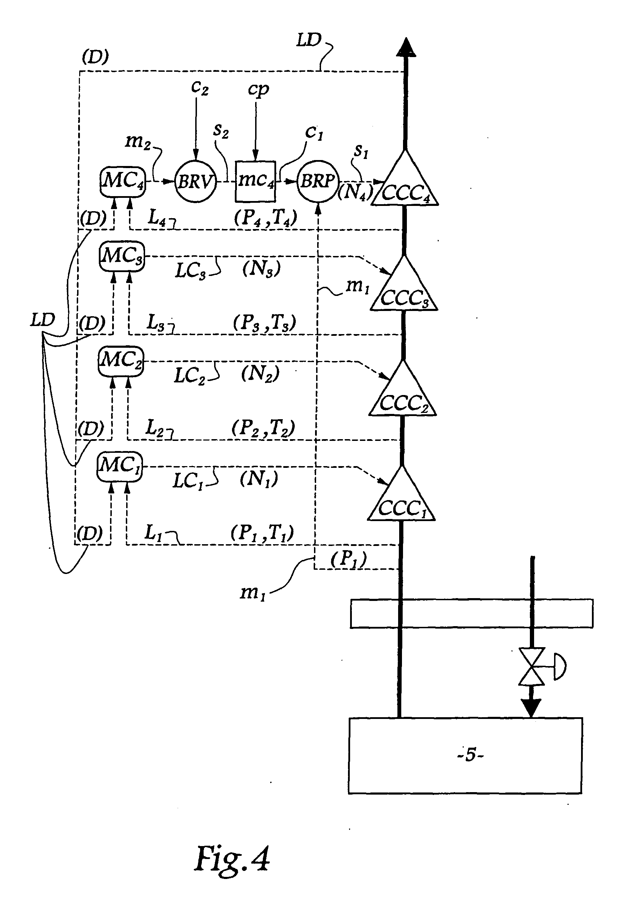

La figure 4 illustre une installation de pilotage du train de compresseurs cryogéniques centrifuges représenté sur la figure 1.

Cette installation comprend une boucle de régulation de la pression BRP. Cette boucle reçoit, par la ligne $m_1$, la mesure de la pression d'aspiration du premier compresseur cryogénique $CCC_1$.

Par ailleurs, la consigne affectée à cette boucle de régulation, qui est matérialisée par la ligne $c_1$, sera décrite plus en détail dans ce qui suit. Enfin, la sortie $S_1$ de cette boucle BRP est reliée au compresseur aval $CCC_4$, de manière à pouvoir en faire varier la vitesse de rotation.

Il est par ailleurs prévu une boucle de régulation de la vitesse BRV. Trois lignes, affectées respectivement des références $m_2$, $c_2$ et $s_2$, représentent la mesure, la consigne, et la sortie de cette seconde boucle de régulation.

L'installation comprend, de plus, quatre modules de calcul $MC_1$, $MC_2$, $MC_3$ et $MC_4$, dont chacun est relié à un compresseur correspondant $CCC_1$ à $CCC_4$.

Le module $MC_1$ est relié à des capteurs de la pression $P_1$ et de la température $T_1$ d'admission du compresseur $C_1$, par une ligne $L_1$. De façon analogue, les modules $MC_2$, $MC_3$ et $MC_4$ sont reliés à des capteurs de la pression $P_2$ à $P_4$ et de la température $T_2$ à $T_4$ d'admission des compresseurs $CCC_2$ à $CCC_4$, par des lignes $L_2$ à $L_4$.

Un capteur du débit massique D du gaz circulant dans la ligne de compression est relié à chacun des modules de calcul $MC_1$ à $MC_4$, par une ligne LD. Ces différents modules de calcul comprennent chacun des moyens de calcul et de stockage de données.

Le module $MC_4$ calcule, à chaque instant, les coordonnées $X_4(inst)$ et $NU_4(inst)$ à partir des valeurs mesurées par les différents capteurs associés, relatifs au débit, à la température et à la pression.

Ce module $MC_4$ calcule également, pour ce $X_4(inst)$ donné, la valeur théorique $NU_4(th)$, située sur le chemin optimal $C'_{OPT}$ de la figure 3.

Les valeurs de $X_4(inst)$, $NU_4(inst)$ et $NU_4(th)$ sont portées sur la figure 3.

Le module $MC_4$ effectue également le rapport $NU_4(inst)/NU_4(th)$, puis dirige le résultat correspondant vers la boucle de régulation BRV, par la ligne $m_2$.

Par ailleurs, la boucle de régulation BRV compare cette mesure $m_2$ à la consigne $c_2$, qui est en l'occurrence égale à 1. La valeur de la sortie $s_2$, qui constitue un coefficient d'atténuation, est alors modulée de façon correspondante.

Cette sortie $s_2$ est dirigée vers un module de calcul supplémentaire $mc_4$, qui effectue la multiplication entre ce coefficient d'atténuation $s_2$ et une consigne fixe de pression, matérialisée par la ligne cp. Cette consigne fixe correspond à la pression visée en amont du premier compresseur $CCC_1$, à savoir par exemple 30 mbar.

Le produit ainsi réalisé, $s_2*cp$, constitue la consigne $c_1$ de la boucle de régulation de la pression BRP. Il convient ainsi de noter que cette consigne $c_1$ est variable, ou « flottante ».

Par ailleurs, chacun des modules de calcul $MC_1$ à $MC_3$ calcule, à chaque instant, les coordonnées des points $(X_i(inst) ; NU_i(inst))$, i variant de 1 à 3, pour chaque compresseur $CCC_1$ à $CCC_3$. Ces modules effectuent également, de manière analogue à ce qui a été décrit ci-dessus pour $MC_4$, le calcul des valeurs de $NU_i(th)$, qui correspondent aux valeurs de NU situées sur le chemin optimal, pour chacun des $X_i(inst)$.

Le pilotage du train de compresseurs de la figure 1 va maintenant être explicité, en référence aux figures 3 et 4.

On suppose que, à un instant donné, les coordonnées du point de fonctionnement du compresseur aval $CCC_4$ sont $(X_4(inst)$ ; $NU_4(inst))$, comme représenté sur le graphe de la figure 3.

Dans ces conditions, $NU_4(inst)$ est inférieur à $NU_4(th)$, situé sur le chemin optimal $C'_{opt}$. Par conséquent, le rapport $NU_4 (inst) / NU_4 (th)$, qui constitue la mesure $m_2$, est inférieur à 1.

Cette mesure $m_2$ de la boucle de régulation de vitesse BRV est donc inférieure à sa consigne $c_2$, qui est égale à 1, de sorte que le signal de sortie $s_2$ est augmenté. Ceci contribue alors à augmenter la valeur de consigne $c_1$ de la boucle de régulation de pression BRP.

La vitesse de rotation $N_4$ du compresseur $CCC_4$ est alors augmentée de façon correspondante, par l'intermédiaire du signal de sortie $s_1$. Le débit volumique de gaz traité par ce compresseur $CCC_4$ se trouve également augmenté, de même que son taux de compression.

Ceci s'accompagne alors d'une diminution correspondante de la pression d'aspiration $P_4$ du compresseur aval $CCC_4$, accompagnée d'une augmentation de la température du gaz refoulé.

Finalement, la valeur du débit réduit-réduit $X_4$ augmente. Cette augmentation du débit réduit-réduit, ainsi que celle de la vitesse réduite-réduite $NU_4$, est matérialisée sur le graphe de la figure 3 par le point de fonctionnement suivant $(X'_4(inst)$ ; $NU'_4(inst))$, situé en haut et à droite du point de fonctionnement précédent $(X_4(inst)$ $NU_4(inst))$, à savoir plus près du chemin optimal.

Etant donné que les différentes boucles de régulation BRP et BRV agissent de façon continue, la courbe $X_4 = f (NU_4)$ va se rapprocher progressivement du chemin optimal $C'_{OPT}$, jusqu'à l'atteindre en un point $(X''_4$ ; $NU''_4)$, représenté sur la figure 3.

Dès que la courbe de fonctionnement rejoint le chemin optimal, il y a égalité entre la valeur mesurée de $NU_4$ et la valeur théorique de $NU_4$, de sorte que la boucle de régulation de la vitesse BRV n'intervient plus. La consigne $c_1$ de la boucle de régulation de la pression BRP se trouve donc maintenue à une valeur constante.

Par ailleurs, si la mesure $m_1$ de cette boucle, à savoir la pression d'aspiration $P_1$ du compresseur $CCC_1$, ne varie pas, le débit massique traité par le compresseur diminue, de même que le débit réduit-réduit $X_4$. Ainsi, la courbe $NU_4 = f(X_4)$ va rejoindre le point de fonctionnement (1 ; 1), sensiblement selon le tronçon de courbe plus épais, situé à la partie supérieure du chemin optimal $C'_{OPT}$ à la figure 3.

Ceci signifie que la vitesse de rotation du compresseur $C_4$ va augmenter jusqu'à atteindre la vitesse nominale, ce qui correspond alors à une pression $P_1$ de 30 mbar. Il y a alors lieu de procéder à une mise en régime, pour ces conditions nominales, qui sera explicitée dans ce qui suit.

On reviendra maintenant à l'action des boucles de régulation BRV et BRP, sur les compresseurs amont $CCC_1$ à $CCC_3$.

On a vu que, d'une part, le compresseur aval $CCC_4$ définit, à chaque instant, le débit massique qui lui permet de fonctionner correctement.

On a en outre vu que les calculateurs $MC_1$, $MC_2$ et $MC_3$ calculent à chaque instant les valeurs de NU permettant de se situer sur le chemin optimal $C'_{opt}$, pour chaque compresseur. Il s'agit en l'occurrence de $NU_1(th)$, $NU_2(th)$ et $NU_3(th)$.

Dans ces conditions, chaque module de calcul $MC_1$ à $MC_3$ pilote un compresseur correspondant $CCC_1$ à $CCC_3$, en lui affectant les vitesses $N_1(th)$ à $N_3(th)$, qui correspondent aux valeurs théoriques de NU présentées immédiatement ci-dessus. Ceci est assuré par les lignes de commande $LC_1$ à $LC_3$ .

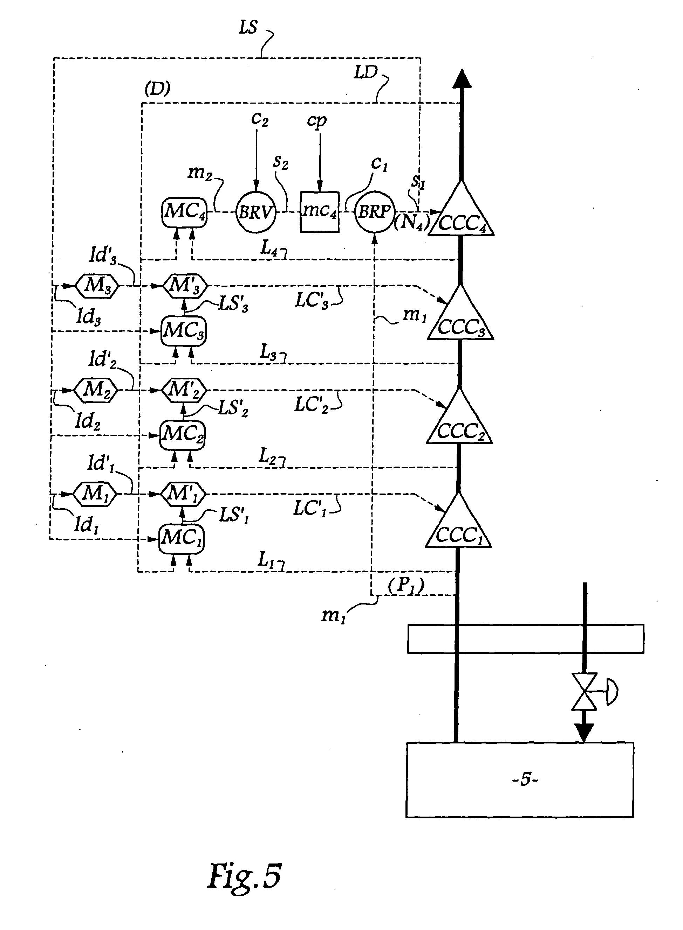

La figure 5 illustre une variante de l'installation de la figure 4. Cette variante comprend tous les éléments de la figure 4, ainsi que des moyens additionnels concernant le pilotage des compresseurs amont $CCC_1$ à $CCC_3$.

Sur cette figure 5, les modules de calcul $MC_1$ à $MC_3$ reçoivent, de façon analogue à ce qui a été décrit précédemment, des informations leur permettant de calculer les valeurs instantanées de $X_1$ à $X_3$, ainsi que les valeurs respectivement instantanées et théoriques de $NU_1$ à $NU_3$.

Il est par ailleurs prévu une ligne supplémentaire de commande LS, reliant la sortie de la boucle de régulation de pression BRP à chacun des modules de calcul $MC_1$ à $MC_3$. Cette ligne LS est munie de dérivations $ld_1$ à $ld_3$, dont chacune est dirigée vers un module multiplicateur correspondant $M_1$ à $M_3$.

Chaque module $M_1$ à $M_3$ assure la multiplication, par un coefficient donné $a_1$, $a_2$ ou $a_3$, du signal véhiculé par la ligne LS, à savoir la vitesse de rotation $N_4$ qui est impartie au compresseur aval $CCC_4$. Dans ces conditions, les lignes $ld'_1$ à $ld'_3$, situées en aval des modules $M_1$ à $M_3$, transmettent des signaux représentatifs des produits $(N_4 * a_1)$, $(N_4 * a_2)$ et $(N_4 * a_3)$ .

Par ailleurs, des lignes $LS'_1$ à $LS'_3$ partent de chaque module de calcul $MC_1$ à $MC_3$. Ces lignes assurent la transmission des produits suivants, pour i = 1 à 3 :

$$N_i(th) \ / \ (a_i * N_4).$$

Comme cela a été explicité précédemment, les valeurs de $N_i(th)$ sont situées sur le chemin optimal de la figure 3.

Les lignes $ld_1$ à $ld_3$, ainsi que $LS'_1$ à $LS'_3$, débouchent deux à deux dans des modules supplémentaires de multiplication $M'_1$ à $M'_3$. Chacun de ces modules assure la multiplication entre les informations transportées par les différentes lignes, soit, pour i = 1 à 3 :

$$(N_4 * a_i) * N_i(th)/N_4 * a_i.$$

Le produit correspondant, qui est égal à $N_i(th)$, est alors dirigé vers les compresseurs $C_1$ à $C_3$, par des lignes de commande respectives $LC'_1$ à $LC'_3$.

L'utilisation de ces différents modules de multiplication $M_1$ à $M_3$, ainsi que $M'_1$ à $M'_3$ est avantageuse, en ce sens que les temps de calcul d'adaptation par les modules MC1, MC2 et MC3, qui peuvent être longs en fonction de la rapidité du processeur, ont alors une influence réduite sur la qualité du pilotage.

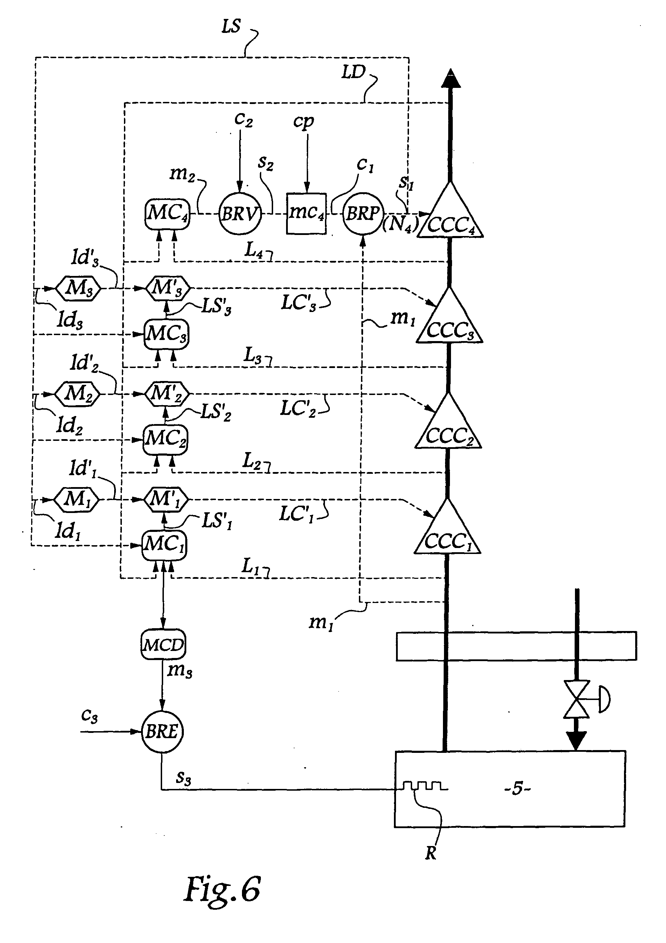

La figure 6 illustre une variante de la figure 5. Cette variante comprend tous les moyens de la figure 5, ainsi que des moyens additionnels correspondant au fonctionnement des compresseurs aux conditions nominales.

Lorsque la pression $P_1$ atteint la valeur visée, par exemple 30 mbar comme on l'a vu précédemment, les vitesses des différents compresseurs tendent vers des valeurs fixes.

Par conséquent, en l'absence de mesure supplémentaire, il y a réduction du débit massique de gaz transporté par les compresseurs, de sorte que les points de fonctionnement ont tendance à se rapprocher de la courbe de décrochage $C_{DEC}$, illustrée sur la figure 2.

En outre, il ne peut pas être envisagé d'accélérer les différents compresseurs. En effet, si tel était le cas, la pression $P_1$ deviendrait inférieure à la valeur objectif précitée.

La solution à ce problème est fournie par l'installation de la figure 6.

Il y est représenté une boucle de régulation d'énergie BRE, dont la ligne de mesure $m_3$ provient d'un calculateur MCD. Celui-ci calcule, en permanence, la distance existant entre le point de fonctionnement instantané, et la courbe de décrochage, pour l'un quelconque des compresseurs du train, par exemple, comme représenté, le compresseur $CCC_1$.

En faisant à nouveau référence à la figure 2, cette distance instantanée d(inst) correspond à la valeur :

$$((X(inst) - X_S)/ X_S) * (Taux(inst)/Taux_{NOM}).$$

Par ailleurs, la consigne $c_3$ de la boucle BRE correspond à une distance minimale, dite de sécurité, au-delà de laquelle tout point de fonctionnement doit se situer. Cette distance minimale, matérialisée par la référence $d_{MIN}$ sur la figure 2, est par exemple égale à 50% de la distance entre la courbe de décrochage $C_{DEC}$ et le chemin optimal $C_{OPT}$.

Enfin, la sortie $S_3$ de la boucle de régulation BRE est dirigée vers un moyen de fourniture d'énergie électrique disposé dans le bain 5. Il s'agit par exemple d'une résistance R, étant entendu que tout moyen de fourniture d'énergie, autre qu'électrique, peut être envisagé.

En service, lorsque le point de fonctionnement du compresseur $CCC_1$ se rapproche de manière trop sensible de la courbe de décrochage $C_{DEC}$, la boucle de régulation BRE injecte de la puissance dans le bain d'hélium 5. Ceci induit alors la vaporisation d'une quantité d'hélium correspondante, permettant une augmentation du débit massique de gaz circulant dans les compresseurs, ce qui garantit que le point de fonctionnement s'éloigne de la courbe de décrochage.

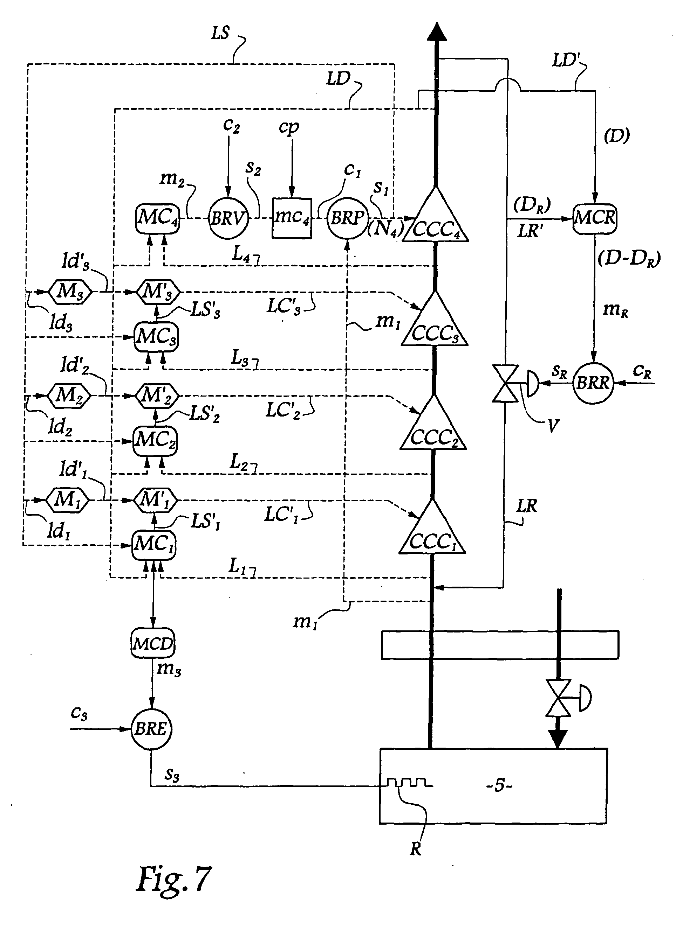

La figure 7 illustre une variante de la figure 6, relative à la phase de descente en pression du gaz.

Lors d'une telle descente en pression, les compresseurs traitent un débit maximal de gaz, qui est supérieur à la valeur du débit nominal. Dans ces conditions, un tel débit est parfois supérieur à une valeur limite acceptable par le réfrigérateur 1, vers lequel est envoyé cet hélium gazeux.

Comme le montre la figure 7, on prévoit une ligne de recyclage LR, pourvue d'une vanne V qui s'étend depuis l'aval du compresseur $CCC_4$ vers l'amont du compresseur $CCC_1$. Un module de calcul MCR reçoit, par des lignes respectives LD' et LR', des informations relatives, d'une part, au débit D s'écoulant immédiatement en aval du compresseur $CCC_4$ et, d'autre part, au débit de recyclage $D_R$ s'écoulant par la ligne LR.

Ce module de calcul MCR transmet un signal représentatif de la différence entre les deux débits, qui correspond au débit envoyé au réfrigérateur, par une ligne $m_R$, vers une boucle de régulation supplémentaire, affectée de la référence BRR.

La consigne $c_R$ de cette boucle de régulation correspond au débit maximal que peut accepter le réfrigérateur. Enfin, la sortie $s_R$ de cette boucle BRR permet de commander la vanne de recyclage V.

En service, lorsque le débit envoyé au réfrigérateur, qui est égal à la différence $(D-D_R)$ entre le débit de sortie

de $CCC_4$ et l'éventuel débit de recyclage, atteint la valeur maximale $C_R$, la boucle de régulation BRR commande l'ouverture de la vanne V. Ceci permet alors d'augmenter le débit de recyclage, et donc de réduire le débit effectivement dirigé vers le réfrigérateur, de manière à garantir l'intégrité de ce dernier.

Il convient de noter que cette opération de recyclage contribue à augmenter, de deux manières, le débit réduit-réduit. En effet, ce recyclage induit une augmentation, non seulement du débit massique, mais encore de la température du gaz envoyé à l'unité 1, étant donné qu'est recyclé du gaz présentant une température plus élevée.

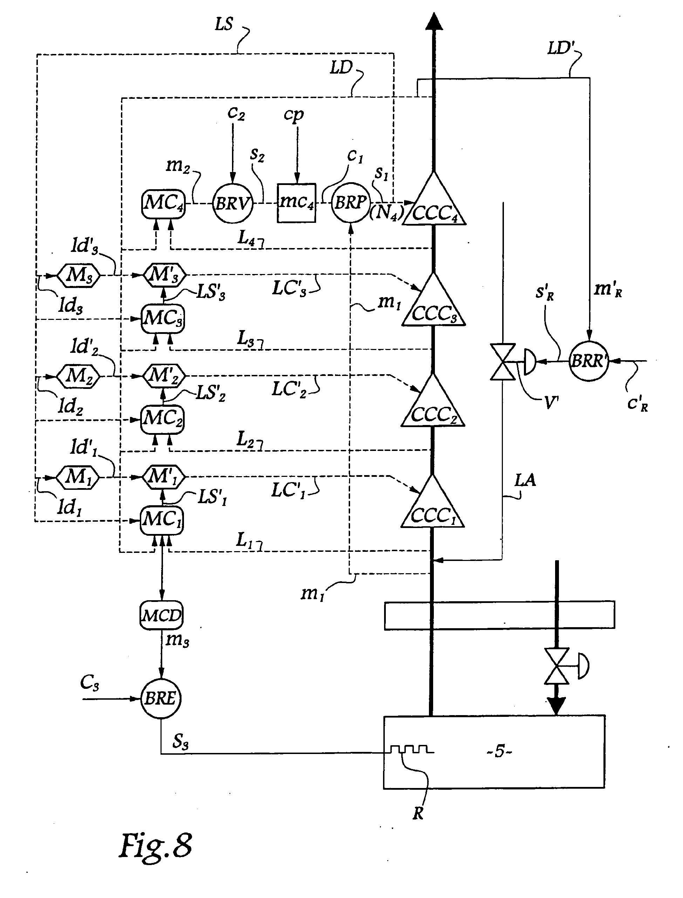

La figure 8 illustre une variante de réalisation de l'installation de la figure 7.

Dans l'installation de cette figure 8, la ligne de recyclage est remplacée par une ligne LA, véhiculant du gaz à la température ambiante, par exemple voisine de 300K. Dans ces conditions, la mesure $m'_R$ de la boucle de régulation BRR' correspond au débit de gaz circulant en aval du compresseur $CCC_4$.

En service, lorsque ce débit mesuré atteint la valeur de consigne $C'_R$, qui correspond toujours à la valeur maximale de débit acceptable par le réfrigérateur, la boucle BRR' commande l'ouverture de la vanne de recyclage V', par la sortie s'R, ce qui induit l'injection de gaz en amont du compresseur $CCC_1$.

Cette injection de gaz à la température ambiante assure une augmentation de la température du mélange résultant. Ceci provoque alors une augmentation du débit réduit-réduit X, ce qui permet d'éloigner les points de fonctionnement des courbes de décrochage, tout en maintenant le débit à une valeur acceptable par le réfrigérateur.

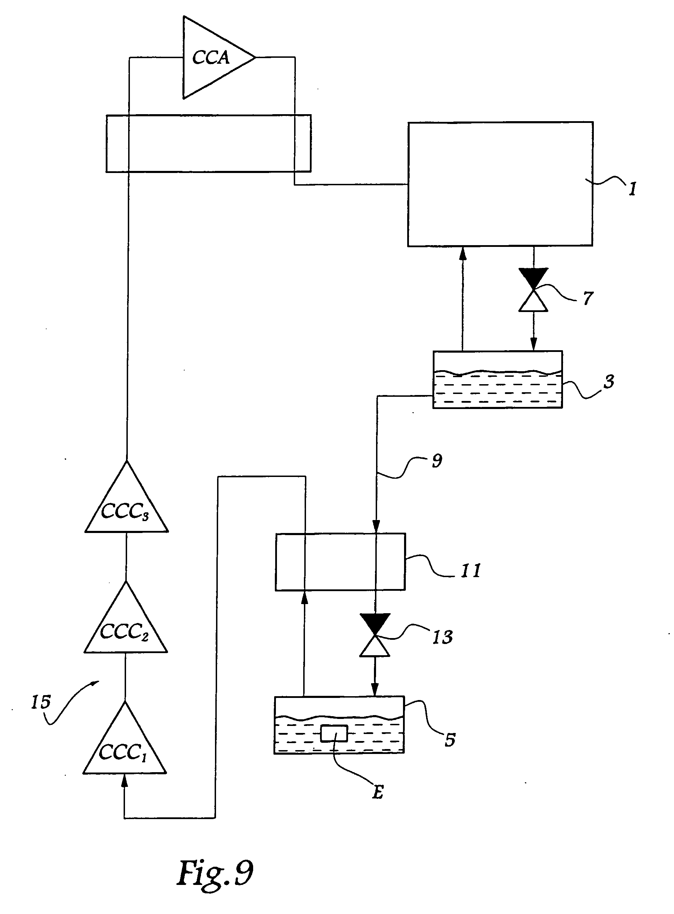

La figure 9 illustre une autre variante de réalisation de l'invention.

La compression y est assurée de façon mixte, en combinant trois compresseurs $CCC_1$ à $CCC_3$ fonctionnant à température cryogénique, ainsi qu'un compresseur CCA, fonctionnant à la température ambiante. Il doit être entendu que le nombre de compresseurs fonctionnant à température cryogénique ou à températures ambiante, peut être quelconque, à titre de variante.

Dans ces conditions, seuls les compresseurs cryogéniques CCC sont pilotés de façon conforme à l'invention.

L'invention n'est pas limitée aux exemples décrits et représentés.

Ainsi, le procédé de l'invention trouve également son application au pilotage d'un unique compresseur.

Dans cette optique, la mesure $m_1$ de la boucle de régulation de pression BRP correspond à la pression d'aspiration de cet unique compresseur.

Par ailleurs, le procédé de pilotage explicité précédemment s'applique également à une phase de démarrage, aussi bien d'un train de compresseurs que d'un compresseur unique.

Enfin, le chemin optimal peut être différent de celui illustré à la figure 2. En particulier, la distance entre ce chemin optimal et la courbe de décrochage peut ne pas être proportionnelle à la valeur du taux de compression.

## Revendications

1. Procédé de pilotage d'une ligne de compression comprenant au moins un compresseur centrifuge cryogénique ($CCC_1$, $CCC_2$, $CCC_3$, $CCC_4$) , ladite ligne étant notamment apte à comprimer un gaz initialement à basse température et à basse pression, en particulier de l'hélium, provenant d'une capacité (5), procédé dans lequel on pilote la vitesse de rotation du ou de chaque compresseur, **caractérisé en ce qu'**il comprend les étapes suivantes :

   - on choisit une courbe prédéterminée ($C'_{OPT}$), pouvant être représentée sous forme d'un premier paramètre (NU) représentatif de la vitesse de rotation (N) d'un compresseur, en fonction d'un second paramètre (X), représentatif du débit massique (D) dudit compresseur ;
   - on régule la vitesse de rotation ($N_4$) du compresseur centrifuge cryogénique ($CCC_4$) disposé le plus en aval de la ligne de compression en fonction des valeurs relatives, d'une part, de la pression instantanée ($P_1$) à l'aspiration du compresseur centrifuge cryogénique ($CCC_1$) situé le plus en amont de la ligne de compression et, d'autre part, d'une pression de consigne variable ($c_1$) ; et
   - on régule la pression de consigne variable ($c_1$) en fonction de la valeur du rapport entre, d'une part, la valeur instantanée ($NU_4$(inst)), pour le compresseur aval ($CCC_4$), du premier paramètre représentatif de la vitesse de rotation du compresseur et, d'autre part, la valeur théorique ($NU_4$(th)) de ce premier paramètre, située sur ladite courbe prédéterminée ($C'_{OPT}$), qui correspond à la valeur instantanée ($X_4$(inst)), pour ce compresseur aval ($CCC_4$), du second paramètre représentatif du débit massique.

2. Procédé selon la revendication 1, **caractérisé en ce que** le paramètre représentatif de la vitesse de rotation est la vitesse réduite-réduite (NU).

3. Procédé selon la revendication 1 ou 2, **caractérisé en ce que** le paramètre représentatif du débit massique est le débit réduit-réduit (X).

4. Procédé selon l'une quelconque des revendications 1 à 3, **caractérisé en ce que**, dans une représentation faisant intervenir le taux de compression (TAUX) en fonction du débit réduit-réduit (X), la courbe prédéterminée définit une seconde courbe prédéterminée ($C_{OPT}$) qui se situe à droite d'une courbe de décrochage ($C_{DEC}$) du compresseur.

5. Procédé selon la revendication 4, **caractérisé en ce que** ladite seconde courbe prédéterminée ($C_{OPT}$) passe par le point de fonctionnement nominal (1 ; $TAUX_{NOM}$).

6. Procédé selon la revendication 4 ou 5, **caractérisé en ce que** la distance (d) séparant, pour un taux de compression donné, la seconde courbe prédéterminée ($C_{OPT}$) et la courbe de décrochage ($C_{DEC}$) est proportionnelle à la valeur du taux de compression (TAUX).

7. Procédé selon l'une quelconque des revendications précédentes, **caractérisé en ce qu'**on régule la pression de consigne variable ($c_1$) en régulant un coefficient d'atténuation ($s_2$), et en multipliant ce coefficient d'atténuation par une valeur fixe (cp), afin d'obtenir ladite pression de consigne variable.

8. Procédé selon la revendication 7, **caractérisé en ce que** la valeur fixe (cp) est égale à une valeur de pression désirée à l'aspiration du compresseur amont ($CCC_1$), notamment 30 mbar.

9. Procédé selon l'une quelconque des revendications précédentes, **caractérisé en ce qu'**on augmente la pression de consigne variable ($C_1$) lorsque la valeur instantanée ($NU_4(inst)$), pour le compresseur aval ($CCC_4$), du paramètre représentatif de la vitesse de rotation est inférieure à la valeur théorique ($NU_4$ (th).

10. Procédé selon l'une quelconque des revendications précédentes, **caractérisé en ce qu'**on augmente la vitesse de rotation ($N_4$) du compresseur centrifuge cryogénique aval ($CCC_4$), lorsque la pression instantanée ($P_1$) à l'aspiration du compresseur centrifuge cryogénique amont ($CCC_1$) est supérieure à la pression de consigne variable ($c_1$).

11. Procédé selon l'une quelconque des revendications précédentes, **caractérisé en ce qu'**il est prévu un compresseur aval ($CCC_4$) et au moins un autre compresseur ($CCC_1$ à $CCC_3$) et **en ce qu'**on affecte, au ou à chaque autre compresseur ($CCC_1$ à $CCC_3$), une vitesse de rotation correspondant à la valeur théorique ($NU_1(th)$ à $NU_3(th)$), pour chaque autre compresseur, du premier paramètre représentatif de la vitesse de rotation, cette valeur étant située sur la courbe prédéterminée ($C'_{OPT}$) et correspondant à la valeur instantanée ($X_1(inst)$. à $X_3(inst)$) du second paramètre, représentatif du débit massique.

12. Procédé selon l'une quelconque des revendications 1 à 10, **caractérisé en ce qu'**il est prévu un compresseur aval ($CCC_4$) et au moins un autre compresseur ($CCC_1$ à $CCC_3$) et **en ce qu'**on affecte, au ou à chaque autre compresseur aval ($CCC_1$ à $CCC_3$), au moins pendant une phase de démarrage de celui-ci, une vitesse de rotation ($N_1$ à $N_3$) correspondant au produit de la vitesse de rotation ($N_4$) du compresseur aval ($CCC_4$), par un coefficient prédéterminé ($a_1$ à $a_3$) .

13. Procédé selon l'une quelconque des revendications précédentes, **caractérisé en ce que**, après que le ou chaque compresseur centrifuge cryogénique a atteint son régime nominal (figure 6), on fournit de l'énergie, notamment électrique, dans la capacité (5), lorsque la distance ($d_{inst}$) entre un point de fonctionnement instantané ($X_{inst}$ ; $TAUX_{inst}$) et la courbe de décrochage ($C_{DEC}$) devient inférieure à une valeur minimale prédéterminée ($d_{MIN}$).

14. Procédé selon l'une quelconque des revendications précédentes, **caractérisé en ce qu'**on recycle une fraction de gaz de l'aval vers l'amont de la ligne de compression, par un conduit de recyclage (LR), on mesure le débit effectivement envoyé en aval de ce conduit, en particulier vers une unité de liquéfaction (1) de ce gaz, et on régule l'écoulement de gaz dans le conduit de recyclage en fonction des valeurs relatives, d'une part, du débit ($m_R$) effectivement envoyé en aval de la ligne de compression et, d'autre part, d'un débit seuil ($c_R$), qui correspond en particulier à un débit acceptable par cette unité de liquéfaction.

15. Procédé selon l'une quelconque des revendications 1 à 13, **caractérisé en ce qu'**on injecte du gaz d'appoint (LA) à une température sensiblement plus élevée que celle du gaz circulant dans la ligne de compression, en particulier à la température ambiante, et **en ce qu'**on régule l'injection de ce gaz d'appoint en fonction des valeurs relatives, d'une part, du débit de gaz ($m'_R$) circulant en aval de la ligne de compression et, d'autre part, d'un débit seuil ($c'_R$), correspondant en particulier à un débit acceptable par une unité de liquéfaction (1) de ce gaz.

16. Installation de pilotage d'une ligne de compression comprenant au moins un compresseur centrifuge cryogénique

(CCC$_1$, CCC$_2$, CCC$_3$, CCC$_4$), pour la mise en oeuvre du procédé conforme à l'une quelconque des revendications précédentes, **caractérisée en ce qu'**elle comprend :

- des premiers moyens de régulation (BRV), aptes à réguler la vitesse de rotation (N$_4$) du compresseur centrifuge cryogénique (CCC$_4$) disposé en aval de la ligne de compression, en fonction des valeurs relatives, d'une part, de la pression instantanée (P$_1$) à l'aspiration du compresseur centrifuge cryogénique (CCC$_1$) situé en amont de la ligne de compression et, d'autre part, d'une pression de consigne variable (c$_1$) ; et
- des seconds moyens de régulation (BRP), aptes à réguler la pression de consigne variable (c$_1$) en fonction de la valeur du rapport entre, d'une part, la valeur instantanée (NU$_4$(inst)), pour le compresseur aval (CCC$_4$), du premier paramètre de la courbe prédéterminée (C'$_{OPT}$), représentatif de la vitesse de rotation du compresseur et, d'autre part, la valeur théorique (NU$_4$(th)) de ce premier paramètre, située sur cette courbe prédéterminée, qui correspond à la valeur instantanée (X$_4$(inst)), pour le compresseur aval (CCC$_4$), du second paramètre de cette courbe prédéterminée, représentatif du débit massique du compresseur.

17. Installation selon la revendication 16, **caractérisée en ce que** les moyens de régulation de la vitesse comprennent une première boucle de régulation (BRV) qui possède une consigne (c$_1$) égale à la pression de consigne variable, une mesure (m$_1$) égale à la pression (P$_1$) à l'aspiration du compresseur centrifuge cryogénique amont (CCC$_1$), ainsi qu'une sortie (s$_1$) apte à réguler la vitesse du compresseur centrifuge cryogénique aval (CCC$_4$).

18. Installation selon la revendication 16 ou 17, **caractérisée en ce que** les moyens de régulation de la pression de consigne variable comprennent une seconde boucle de régulation (BRP), possédant une consigne (c$_2$) égale à 1, une mesure (m$_2$) égale au rapport entre les valeurs instantanée (NU$_4$(inst)) et théorique (NU$_4$(th)) du premier paramètre, ainsi qu'une sortie (s$_2$) apte à modifier la valeur de cette pression de consigne variable.

19. Installation selon la revendication 18, **caractérisée en ce que** la sortie (S$_2$) de la seconde boucle de régulation (BRP) débouche dans un module de multiplication (mc$_4$), apte à multiplier la valeur de cette sortie (s$_2$) par une valeur fixe (cp).

20. Installation selon la revendication 19, **caractérisée en ce que** cette valeur fixe (cp) est égale à une valeur de pression désirée à l'aspiration du compresseur amont (CCC$_1$), notamment 30 mbar.

21. Installation selon l'une quelconque des revendications 16 à 20, **caractérisée en ce qu'**elle comprend en outre au moins un module de calcul (MC$_1$ à MC$_4$) apte à calculer à chaque instant, pour le ou chaque compresseur, les valeurs instantanée (NU(inst)) et théorique (NU(th)) du premier paramètre, représentatif de la vitesse de rotation, ainsi que la valeur instantanée (X(inst)) du second paramètre, représentatif du débit massique.

22. Installation selon l'une quelconque des revendications 16 à 21, pour la mise en oeuvre du procédé selon la revendication 13, **caractérisée en ce qu'**elle comprend des moyens (R) aptes à fournir de l'énergie, notamment électrique, à la capacité (5), lorsque la distance (d$_{inst}$) entre le point de fonctionnement (X$_{inst}$, TAUX$_{inst}$) et la courbe de décrochage devient inférieure à une valeur minimale prédéterminée (d$_{MIN}$).

23. Installation selon la revendication 22, **caractérisée en ce qu'**elle comprend une boucle de régulation de l'énergie (BRE), possédant une consigne (C$_3$) égale à ladite valeur minimale prédéterminée (d$_{MIN}$), une mesure (m$_3$) mise en relation avec un autre module de calcul (MCD), apte à calculer à chaque instant la distance (d$_{inst}$)entre le point de fonctionnement et la courbe de décrochage, ainsi qu'une sortie (s$_3$) en relation avec les moyens de fourniture d'énergie (R).

24. Installation selon l'une quelconque des revendications 16 à 23, pour la mise en place du procédé selon la revendication 14, **caractérisée en ce qu'**elle comprend un conduit de recyclage (LR), apte à recycler une fraction de gaz de l'aval vers l'amont de la ligne de compression, ainsi que des moyens de régulation de débit (BRR), aptes à réguler l'écoulement de gaz dans ce conduit de recyclage en fonction des valeurs relatives, d'une part, du débit (m$_R$) effectivement envoyé en aval de la ligne de compression et, d'autre part, d'un débit seuil (c$_R$).

25. Installation selon la revendication 24, **caractérisée en ce que** les moyens de régulation de débit comprennent une boucle de régulation du débit recyclé (BRR) possédant une consigne (c$_R$) égale au débit seuil, une mesure (m$_R$) correspondant à la valeur instantanée du débit effectivement envoyé en aval de la ligne de compression, ainsi qu'une sortie (s$_R$) mise en communication avec un organe d'ouverture-fermeture, en particulier une vanne (V), dont est muni le conduit de recyclage (LR).

**26.** Installation selon l'une quelconque des revendications 16 à 25, pour la mise en oeuvre du procédé selon la revendication 15, **caractérisée en ce qu'**elle comprend un conduit (LA) d'injection d'un gaz d'appoint à une température sensiblement plus élevée que celle du gaz circulant dans la ligne de compression, en particulier à la température ambiante, ainsi que des moyens de régulation de l'injection (BRR'), aptes à réguler l'injection de ce gaz d'appoint en fonction des valeurs relatives, d'une part, du débit de gaz (m'$_R$) circulant en aval de la ligne de compression et, d'autre part, d'un débit seuil (c'$_R$).

**27.** Installation selon la revendication 26, **caractérisée en ce que** les moyens de régulation de l'injection comprennent une boucle de régulation de l'injection (BRR') possédant une consigne (c'$_R$) égale à la valeur du débit seuil, une mesure (m'$_R$) égale à la valeur instantanée du débit de gaz circulant en aval de la ligne de compression, ainsi qu'une sortie (s'$_R$) mise en relation avec un organe d'ouverture-fermeture, en particulier une vanne (V'), dont est muni le conduit d'injection (LA).

**28.** Ligne de compression, comprenant au moins, un compresseur centrifuge cryogénique (CCC$_1$ à CCC$_4$), ainsi qu'une installation de pilotage du ou de chaque compresseur, **caractérisée en ce que** cette installation de pilotage est conforme à l'une quelconque des revendications 16 à 27.

**29.** Installation de réfrigération par vaporisation d'un gaz liquéfié à basse pression et basse température, notamment d'hélium, comprenant une capacité (5) contenant le fluide diphasique à basse température et à basse pression, une unité (1) de liquéfaction de ce gaz, une ligne d'alimentation en fluide diphasique à basse température et à basse pression, munie de moyens (7, 13) de détente de ce gaz liquéfié, reliant l'unité de liquéfaction à la capacité, et une ligne (15) de compression de la phase gazeuse, reliant la capacité à l'unité de liquéfaction, **caractérisée en ce que** la ligne de compression (15) est conforme à la revendication 28.

**Claims**

**1.** Method for controlling a compression line comprising at least one cryogenic centrifugal compressor (CCC$_1$, CCC$_2$, CCC$_3$, CCC$_4$), said line being able in particular to compress a gas initially at low temperature and at low pressure, in particular helium, arriving from a vessel (5), method in which the speed of rotation of the or each compressor is controlled, **characterized in that** it comprises the following steps:

- a predetermined curve (C'$_{OPT}$) is selected, which can be represented in the form of a first parameter (NU) representative of the speed of rotation (N) of a compressor, as a function of a second parameter (X), representative of the mass flow rate (D) of said compressor;
- the speed of rotation (N$_4$) of the cryogenic centrifugal compressor (CCC$_4$) disposed furthest downstream of the compression line is regulated as a function of the relative values, on the one hand, of the instantaneous pressure (P$_1$) at the inlet of the cryogenic centrifugal compressor (CCC$_1$) located furthest upstream of the compression line and, on the other, of a variable pressure setpoint (c$_1$) ; and
- the variable pressure setpoint (c$_1$) is regulated as a function of the value of the ratio between, on the one hand, the instantaneous value (NU$_4$ (inst)), for the downstream compressor (CCC$_4$), of the first parameter representative of the speed of rotation of the compressor and, on the other, the theoretical value (NU$_4$(th)) of this first parameter, situated on said predetermined curve (C'$_{OPT}$), which corresponds to the instantaneous value (X$_4$ (inst)), for this downstream compressor (CCC$_4$), of the second parameter representative of the mass flow rate.

**2.** Method according to Claim 1, **characterized in that** the parameter representative of the speed of rotation is the reduced-reduced speed (NU).

**3.** Method according to Claim 1 or 2 **characterized in that** the parameter representative of the mass flow rate is the reduced-reduced flow rate (X).

**4.** Method according to any one of Claims 1 to 3, **characterized in that**, in a representation which includes the compression ratio (TAUX) as a function of the reduced-reduced flow rate (X), the predetermined curve defines a second predetermined curve (C$_{OPT}$) which is situated to the right of a stalling curve (C$_{DEC}$) of the compressor.

**5.** Method according to Claim 4, **characterized in that** said second predetermined curve (C$_{OPT}$) passes through the nominal operating point (1 ; TAUX$_{NOM}$).

6. Method according to Claim 4 or 5, **characterized in that**, for a given compression ratio, the distance (d) between the second predetermined curve ($C_{OPT}$) and the stalling curve ($C_{DEC}$) is proportional to the value of the compression ratio (TAUX).

7. Method according to any one of the preceding claims, **characterized in that** the variable pressure setpoint ($c_1$) is regulated by regulating an attenuation coefficient ($s_2$), and by multiplying this attenuation coefficient by a fixed value (cp) in order to obtain said variable pressure setpoint.

8. Method according to Claim 7, **characterized in that** the fixed value (cp) is equal to a desired pressure value at the inlet of the upstream compressor ($CCC_1$), in particular 30 mbar.

9. Method according to any one of the preceding claims, **characterized in that** the variable pressure setpoint ($c_1$) is increased when the instantaneous value ($NU_4(inst)$), for the downstream compressor ($CCC_4$), of the parameter representative of the speed of rotation, is less than the theoretical value ($Nu_4(th)$).

10. Method according to any one of the preceding claims, **characterized in that** the speed of rotation ($N_4$) of the downstream cryogenic centrifugal compressor ($CCC_4$) is increased when the instantaneous pressure ($P_1$) at the inlet of the upstream cryogenic centrifugal compressor ($CCC_1$) is higher than the variable pressure setpoint ($c_1$).

11. Method according to any one of the preceding claims, **characterized in that** a downstream compressor ($CCC_4$) is provided as well as at least one other compressor ($CCC_1$ to $CCC_3$) and **in that** a speed of rotation is assigned to the or to each other compressor ($CCC_1$ to $CCC_3$), corresponding to the theoretical value ($NU_1$ (th) to $NU_3(th)$), for each other compressor, of the first parameter representative of the speed of rotation, this value being situated on the predetermined curve ($C'_{opt}$) and corresponding to the instantaneous value ($X_1$ (inst) to $X_3$ (inst)) of the second parameter, representative of the mass flow rate.

12. Method according to any one of Claims 1 to 10, **characterized in that** a downstream compressor ($CCC_4$) is provided as well as at least one other compressor ($CCC_1$ to $CCC_3$) and **in that**, at least during a startup phase of said compressor, a speed of rotation ($N_1$ to $N_3$) is applied to the or to each other downstream compressor ($CCC_1$ to $CCC_3$), corresponding to the product of the speed of rotation ($N_4$) of the downstream compressor ($CCC_4$) and a predetermined coefficient ($a_1$ to $a_3$).

13. Method according to any one of the preceding claims, **characterized in that**, after the or each cryogenic centrifugal compressor has reached its nominal speed (Figure 6), energy is supplied, particularly electrical, in the vessel (5), when the distance ($d_{inst}$) between an instantaneous operating point ($X_{inst}$ ; $TAUX_{inst}$) and the stalling curve ($C_{DEC}$) becomes less than a preset minimum value ($d_{MIN}$).

14. Method according to any one of the preceding claims, **characterized in that** a fraction of gas is recycled from downstream to upstream of the compression line via a recycle line (LR), the flow rate actually sent downstream of this line, particularly to a liquefaction unit (1) of this gas, is measured, and the gas flow in the recycle line is regulated as a function of the relative values, on the one hand, of the flow rate ($m_R$) actually sent downstream of the compression line and, on the other, of a threshold flow rate ($C_R$), which corresponds in particular to a flow rate that is acceptable as regards this liquefaction unit.

15. Method according to any one of Claims 1 to 13, **characterized in that** auxiliary gas (LA) is injected at a temperature substantially higher than that of the gas flowing in the compression line, in particular at ambient temperature, and **in that** the injection of this auxiliary gas is regulated as a function of the relative values, on the one hand, of the gas flow rate ($m'_R$) flowing downstream of the compression line and, on the other, of a threshold flow rate ($C'_R$), corresponding in particular to a flow rate that is acceptable as regards a liquefaction unit (1) of this gas.

16. Installation for controlling a compression line comprising at least one cryogenic centrifugal compressor ($CCC_1$, $CCC_2$, $CCC_3$, $CCC_4$), for the putting into practice of the method according to any one of the preceding claims, **characterized in that** it comprises:

- first regulating means (BRV), able to regulate the speed of rotation ($N_4$) of the cryogenic centrifugal compressor ($CCC_4$) located downstream of the compression line, as a function of the relative values, on the one hand, of the instantaneous pressure ($P_1$) at the inlet of the cryogenic centrifugal compressor ($CCC_1$) situated upstream of the compression line and, on the other, at a variable pressure setpoint ($C_1$); and

- second regulating means (BRP), able to regulate the variable pressure setpoint ($c_1$) as a function of the value of the ratio between, on the one hand, the instantaneous value ($NU_4(inst)$), for the downstream compressor ($CCC_4$), of the first parameter of the predetermined curve ($C'_{OPT}$), representative of the speed of rotation of the compressor and, on the other, the theoretical value ($NU_4(th)$) of this first parameter, situated on this predetermined curve, which corresponds to the instantaneous value ($X_4(inst)$), for the downstream compressor ($CCC_4$), of the second parameter of this predetermined curve, representative of the mass flow rate of the compressor.

17. Installation according to Claim 16, **characterized in that** the speed regulating means comprise a first regulation loop (BRV) which has a setpoint ($c_1$) equal to the variable pressure setpoint, a measurement ($m_1$), equal to the pressure ($P_1$) at the inlet of the upstream cryogenic centrifugal compressor ($CCC_1$), and an output ($s_1$) able to regulate the speed of the downstream cryogenic centrifugal compressor ($CCC_4$).

18. Installation according to Claim 16 or 17, **characterized in that** the means for regulating the variable pressure setpoint comprise a second regulation loop (BRP), having a setpoint ($c_2$) equal to one, a measurement ($m_2$) equal to the ratio between the instantaneous ($NU_4(inst)$) and theoretical ($NU_4(th)$) values of the first parameter, and an output ($s_2$) able to modify the value of this variable pressure setpoint.

19. Installation according to Claim 18, **characterized in that** the output ($s_2$) of the second regulation loop (BRP) terminates in a multiplication module ($mc_4$) able to multiply the value of this output (s2) by a fixed value (cp).

20. Installation according to Claim 19, **characterized in that** this fixed value (cp) is equal to a pressure value desired at the inlet of the upstream compressor ($CCC_1$), in particular 30 mbar.

21. Installation according to any one of Claims 16 to 20, **characterized in that** it further comprises at least one computation module ($MC_1$ to $MC_3$) able to calculate at any time, for the or for each compressor, the instantaneous ($NU(inst)$) and theoretical ($NU(th)$) values of the first parameter, representative of the speed of rotation, and the instantaneous value ($X(inst)$) of the second parameter, representative of the mass flow rate.

22. Installation according to any one of Claims 16 to 21, for putting into practice the method according to Claim 13, **characterized in that** it comprises means (R) able to supply energy, particularly electrical, to the vessel (5), when the distance ($d_{inst}$) between the operating point ($X_{inst}$, $TAUX_{inst}$) and the stalling curve becomes less than a preset minimum value ($d_{MIN}$).

23. Installation according to Claim 22, **characterized in that** it comprises an energy regulating loop (BRE), having a setpoint ($c_3$) equal to said preset minimum value ($d_{MIN}$), a measurement ($m_3$) linked to another computation module (MCD), able to calculate, at any time, the distance ($d_{inst}$) between the operating point and the stalling curve, and an output ($s_3$) linked to the energy supply means (R).

24. Installation according to any one of Claims 16 to 23, for setting up the method according to Claim 14, **characterized in that** it comprises a recycle line (LR), able to recycle a fraction of gas from downstream to upstream of the compression line, and flow regulating means (BRR), able to regulate the gas flow in this recycle line as a function of the relative values, on the one hand, of the flow rate ($m_R$) actually sent downstream of the compression line and, on the other, of a threshold flow rate ($c_R$).

25. Installation according to Claim 24, **characterized in that** the flow regulating means comprise a recycle flow regulating loop (BRR) having a setpoint ($C_R$) equal to the threshold flow rate, a measurement ($m_R$) corresponding to the instantaneous value of the rate of flow actually sent downstream of the compression line, and an output ($s_R$) linked with an open-shut member, in particular a valve (V), with which the recycle line (LR) is equipped.

26. Installation according to any one of Claims 16 to 25, for putting into practice the method according to Claim 15, **characterized in that** it comprises a line (LA) for injecting an auxiliary gas at a temperature substantially higher than that of the gas flowing in the compression line, in particular at ambient temperature, and injection regulating means (BRR'), able to regulate the injection of this auxiliary gas as a function of the relative values, on the one hand, of the flow rate ($m'_R$) of the gas flowing downstream of the compression line and, on the other, of a threshold flow rate ($c'_R$).

27. Installation according to Claim 26, **characterized in that** the injection regulating means comprise an injection regulating loop (BRR') having a setpoint ($c'_R$) equal to the value of the threshold flow rate, a measurement ($m'_R$)

equal to the instantaneous value of the gas flow rate flowing downstream of the compression line, and an output ($s'_R$) linked with an open-shut member, in particular a valve (V'), with which the injection line (LA) is equipped.

28. Compression line comprising at least one cryogenic centrifugal compressor ($CCC_1$ to $CCC_4$), and an installation for controlling the or each compressor, **characterized in that** this control installation conforms to any one of Claims 16 to 27.

29. Installation for refrigeration by vaporization of a liquefied gas at low pressure and low temperature, particularly helium, comprising a vessel (5) containing the two-phase fluid at low temperature and at low pressure, a unit (1) for liquefaction of this gas, a feed line for two-phase fluid at low temperature and at low pressure, equipped with means (7, 13) for expanding this liquefied gas, connecting the liquefaction unit to the vessel, and a line (15) for compressing the gas phase connecting the vessel to the liquefaction unit, **characterized in that** the compression line (15) conforms to Claim 28.

**Patentansprüche**

1. Verfahren zum Steuern einer Druckleitung, die mindestens einen kryogenen Zentrifugalkompressor ($CCC_1$, $CCC_2$, $CCC_3$, $CCC_4$) aufweist, wobei die Druckleitung insbesondere ein Gas verdichten kann, das ursprünglich niedrige Temperatur und niedrigen Druck hat, insbesondere Helium, das von einem Behälter (5) kommt, wobei man die Drehzahl des oder jedes Kompressors steuert, **dadurch gekennzeichnet, dass** es die folgenden Schritte aufweist:

   - man wählt eine vorbestimmte Kurve ($C'_{OPT}$) aus, die in Form eines ersten Parameters (NU), der für die Drehzahl (N) eines Kompressors repräsentativ ist, dargestellt werden kann, in Abhängigkeit von einem zweiten Parameter (X), der für den Massedurchsatz (D) des Kompressors repräsentativ ist;
   - man reguliert die Drehzahl ($N_4$) des kryogenen Zentrifugalkompressors ($CCC_4$), der am weitesten stromabwärts der Druckleitung angeordnet ist, in Abhängigkeit von den relativen Werten einerseits des Sofortdrucks ($P_1$) an der Ansaugung des kryogenen Zentrifugalkompressors ($CCC_1$), der am weitesten stromaufwärts der Druckleitung angeordnet ist, und andererseits, von einem variablen Solldruck ($c_1$); und
   - man reguliert den variablen Solldruck ($c_1$) in Abhängigkeit von dem Wert des Verhältnisses zwischen einerseits dem Sofortwert ($NU_4(inst)$), für den stromabwärtigen Kompressor ($CCC_4$), des ersten Parameters, der für die Drehzahl des Kompressors repräsentativ ist, und andererseits dem theoretischen Wert ($NU_4(th)$) dieses ersten Parameters, der sich auf der vorbestimmten Kurve ($C'_{OPT}$) befindet, der dem Sofortwert ($X_4(inst)$), für diesen stromabwärtigen Kompressor ($CCC_4$), des zweiten Parameters, der für den Massedurchsatz repräsentativ ist, entspricht.

2. Verfahren nach Anspruch 1, **dadurch gekennzeichnet, dass** der erste für die Drehzahl repräsentative Parameter die Drehzahl reduziert-reduziert (NU) ist.

3. Verfahren nach Anspruch 1 oder 2, **dadurch gekennzeichnet, dass** der für den Massedurchsatz repräsentative Parameter der Durchsatz reduziert-reduziert (X) ist.

4. Verfahren nach einem der Ansprüche 1 bis 3, **dadurch gekennzeichnet, dass** in einer Darstellung, die die Kompressionsrate (TAUX) in Abhängigkeit von dem Durchsatz reduziert-reduziert (X) eingreifen lässt, die vorbestimmte Kurve eine zweite vorbestimmte Kurve ($C_{OPT}$) definiert, die sich rechts von einer Ausschaltkurve ($C_{DEC}$) des Kompressors befindet.

5. Verfahren nach Anspruch 4, **dadurch gekennzeichnet, dass** die zweite vorbestimmte Kurve ($C_{OPT}$) durch den Nennbetriebspunkt (1; $TAUX_{NOM}$) verläuft.

6. Verfahren nach Anspruch 4 oder 5, **dadurch gekennzeichnet, dass** die Entfernung (d), die für eine gegebene Verdichtungsrate die zweite vorbestimmte Kurve ($C_{OPT}$) und die Ausschaltkurve ($C_{DEC}$) trennt, zu dem Wert der Verdichtungsrate (TAUX) proportional ist.

7. Verfahren nach einem der vorhergehenden Ansprüche, **dadurch gekennzeichnet, dass** man den variablen Solldruck ($c_1$) regelt, indem man einen Dämpfungskoeffizienten ($s_2$) reguliert und diesen Dämpfungskoeffizienten mit einem gleich bleibenden Wert (cp) multipliziert, um den variablen Solldruck zu erzielen.

8. Verfahren nach Anspruch 7, **dadurch gekennzeichnet, dass** der gleich bleibende Wert (cp) gleich einem gewünschtem Druckwert an der Ansaugung des stromaufwärtigen Kompressors (CCC1) ist, insbesondere 30 mbar.

9. Verfahren nach einem der vorhergehenden Ansprüche, **dadurch gekennzeichnet, dass** man den variablen Solldruck ($c_1$) steigert, wenn der Sofortwert ($NU_4$(inst)) für den stromabwärtigen Kompressor ($CCC_4$) des Parameters, der für die Drehzahl repräsentativ ist, kleiner ist als der theoretische Wert ($NU_4$(th).

10. Verfahren nach einem der vorhergehenden Ansprüche, **dadurch gekennzeichnet, dass** man die Drehzahl ($N_4$) des stromabwärtigen kryogenen Zentrifugalkompressors ($CCC_4$) erhöht, wenn der Sofortdruck ($P_1$) an der Ansaugung des stromaufwärtigen kryogenen Zentrifugalkompressors ($CCC_1$) größer ist als der variable Solldruck ($c_1$).

11. Verfahren nach einem der vorhergehenden Ansprüche, **dadurch gekennzeichnet, dass** ein stromabwärtiger Kompressor ($CCC_4$) und mindestens ein weiterer Kompressor ($CCC_1$ bis $CCC_3$) vorgesehen ist, und dass man dem oder jedem anderen Kompressor ($CCC_1$ bis $CCC_3$) eine Drehzahl zuweist, die dem theoretischen Wert ($NU_1$(th) bis $NU_3$(th)) entspricht, für jeden weiteren Kompressor, des ersten Parameters, der für die Drehzahl repräsentativ ist, wobei sich dieser Wert auf der vorbestimmten Kurve ($C'_{OPT}$) befindet und dem Sofortwert ($X_1$(inst) bis $X_3$(inst)) des zweiten Parameters, der für den Massedurchsatz repräsentativ ist, entspricht.

12. Verfahren nach einem der Ansprüche 1 bis 10, **dadurch gekennzeichnet, dass** ein stromabwärtiger Kompressor ($CCC_4$) und mindestens ein weiterer Kompressor ($CCC_1$ bis $CCC_3$) vorgesehen ist, und dass man dem oder jedem weiteren stromabwärtigen Kompressor ($CCC_1$ bis $CCC_3$) mindestens während seiner Startphase eine Drehzahl ($N_1$ bis $N_3$) zuweist, die dem Produkt der Drehzahl ($N_4$) des stromabwärtigen Kompressors ($CCC_4$) multipliziert mit einem vorbestimmten Koeffizienten ($a_1$ bis $a_3$) entspricht.

13. Verfahren nach einem der vorhergehenden Ansprüche, **dadurch gekennzeichnet, dass** man, nachdem der oder jeder kryogene Zentrifugalkompressor seine Nenndrehzahl (Figur 6) erreicht hat, Energie, insbesondere elektrische Energie, in den Behälter (5) einbringt, wenn die Entfernung ($d_{inst}$) zwischen einem Sofortbetriebspunkt ($X_{inst}$; TAU-$X_{inst}$) und der Ausschaltkurve ($C_{DEC}$) kleiner wird als ein vorbestimmter Mindestwert ($d_{MIN}$).

14. Verfahren nach einem der vorhergehenden Ansprüche, **dadurch gekennzeichnet, dass** man einen Gasbruchteil von stromabwärts nach stromaufwärts der Druckleitung, durch eine Recyclingleitung (LR) recycelt, dass man den effektiv nach stromabwärts dieser Leitung geschickten Durchsatz, insbesondere zu einer Verflüssigungseinheit (1) dieses Gases, misst, und dass man die Gasströmung in der Recyclingleitung in Abhängigkeit von den relativen Werten einerseits des effektiv nach stromabwärts der Druckleitung geschickten Durchsatzes ($m_R$) und andererseits des Schwellendurchsatzes ($c_R$), der insbesondere einem für diese Verflüssigungseinheit akzeptablen Durchsatz entspricht, reguliert.

15. Verfahren nach einem der Ansprüche 1 bis 13, **dadurch gekennzeichnet, dass** man Zusatzgas (LA) mit einer im Wesentlichen höheren Temperatur als die des Gases, das in der Druckleitung zirkuliert, insbesondere mit Raumtemperatur einspritzt, und dass man das Einspritzen dieses Zusatzgases in Abhängigkeit von den Relativwerten einerseits des Gasdurchsatzes ($m'_R$), der stromabwärts der Druckleitung zirkuliert, und andererseits eines Schwellendurchsatzes ($c'_R$), der insbesondere einem Durchsatz entspricht, der für eine Verflüssigungseinheit (1) dieses Gases akzeptabel ist, reguliert.

16. Steueranlage einer Druckleitung, die mindestens einen kryogenen Zentrifugalkompressor ($CCC_1$, $CCC_2$, $CCC_3$, $CCC_4$) zum Umsetzen des Verfahrens gemäß einem der vorhergehenden Ansprüche aufweist, **dadurch gekennzeichnet, dass** sie Folgendes aufweist:

- erste Reguliermittel (BRV), die die Drehzahl ($N_4$) des kryogenen Zentrifugalkompressors ($CCC_4$), der stromabwärts der Druckleitung angeordnet ist, in Abhängigkeit von den relativen Werten einerseits des Sofortdrucks ($P_1$) an der Ansaugung des kryogenen Zentrifugalkompressors ($CCC_1$), der stromaufwärts der Druckleitung liegt, und andererseits von einem variablen Solldruck ($c_1$) regulieren können; und
- zweite Reguliermittel (BRP), die den variablen Solldruck ($c_1$) in Abhängigkeit von dem Wert des Verhältnisses zwischen einerseits dem Sofortwert ($NU_4$(inst)), für den stromabwärtigen Kompressor ($CCC_4$), des ersten Parameters der vorbestimmten Kurve ($C'_{OPT}$), der für die Drehzahl des Kompressors repräsentativ ist, und andererseits dem theoretischen Wert ($NU_4$(th)) dieses ersten Parameters, der sich auf dieser vorbestimmten Kurve befindet, der dem Sofortwert ($X_4$(inst)), für den stromabwärtigen Kompressor ($CCC_4$), des zweiten Parameters dieser vorbestimmten Kurve entspricht, der für den Massedurchsatz des Kompressors repräsentativ ist, regulieren können.

**17.** Anlage nach Anspruch 16, **dadurch gekennzeichnet, dass** die Reguliermittel der Drehzahl eine erste Regulierschleife (BRV) aufweisen, die einen Sollwert ($C_1$) gleich dem variablen Solldruck, eine Messung ($m_1$) gleich dem Druck ($P_1$) an der Ansaugung des stromaufwärtigen kryogenen Zentrifugalkompressors ($CCC_1$), sowie einen Aus-gang ($s_1$) besitzt, der die Drehzahl des stromabwärtigen kryogenen Zentrifugalkompressors ($CCC_4$) regulieren kann.

**18.** Anlage nach Anspruch 16 oder 17, **dadurch gekennzeichnet, dass** die Reguliermittel des variablen Solldrucks eine zweite Regulierschleife (BRP) aufweisen, die einen Sollwert ($c_2$) gleich 1, eine Messung ($m_2$) gleich dem Verhältnis zwischen dem Sofortwert ($NU_4(inst)$) und dem theoretischen Wert ($NU_4(th)$) des ersten Parameters, sowie einen Ausgang ($s_2$), der den Wert dieses variablen Solldrucks ändern kann, besitzt.

**19.** Anlage nach Anspruch 18, **dadurch gekennzeichnet, dass** der Ausgang ($s_2$) der zweiten Regulierschleife (BRP) in ein Multipliziermodul ($mc_4$) mündet, das den Wert dieses Ausgangs ($s_2$) mit einem gleich bleibenden Wert (cp) multiplizieren kann.

**20.** Anlage nach Anspruch 19, **dadurch gekennzeichnet, dass** dieser gleich bleibende Wert (cp) gleich einem gewünschten Druckwert an der Ansaugung des stromaufwärtigen Kompressors ($CCC_1$) ist, insbesondere 30 mbar.

**21.** Anlage nach einem der Ansprüche 16 bis 20, **dadurch gekennzeichnet, dass** sie ferner mindestens ein Rechen-modul ($MC_1$ bis $MC_4$) aufweist, das in jedem Augenblick für den oder jeden Kompressor den Sofortwert (NU(inst)) und den theoretischen Wert (NU(th)) des ersten Parameters, der für die Drehzahl repräsentativ ist, sowie den Sofortwert (X(inst)) des zweiten Parameters, der für den Massedurchsatz repräsentativ ist, berechnen kann.

**22.** Anlage nach einem der Ansprüche 16 bis 21 zum Umsetzen des Verfahrens nach Anspruch 13, **dadurch gekennzeichnet, dass** sie Mittel (R) aufweist, die Energie, insbesondere elektrische Energie, an den Behälter (5) liefern können, wenn die Entfernung ($d_{inst}$) zwischen dem Betriebspunkt ($X_{inst}$, $TAUX_{inst}$) und der Ausschaltkurve kleiner wird als ein vorbestimmter Mindestwert ($d_{MIN}$) .

**23.** Anlage nach Anspruch 22, **dadurch gekennzeichnet, dass** sie eine Regulierschleife der Energie (BRE) aufweist, die einen Sollwert ($c_3$) gleich dem vorbestimmten Mindestwert ($d_{MIN}$), eine Messung ($m_3$) die mit einem anderen Rechenmodul (MCD) in Verbindung gebracht wird, das jederzeit die Entfernung ($d_{inst}$) zwischen dem Betriebspunkt und der Ausschaltkurve berechnen kann, sowie einen Ausgang ($s_3$) in Verbindung mit den Energieliefermitteln (R) besitzt.

**24.** Anlage nach einem der Ansprüche 16 bis 23 zum Einrichten des Verfahrens nach Anspruch 14, **dadurch gekennzeichnet, dass** sie eine Recyclingleitung (LR) aufweist, die einen Gasbruchteil von stromabwärts nach stromaufwärts der Druckleitung recyceln kann, sowie Mittel zum Regulieren des Durchsatzes (BRR), die die Gasströmung in dieser Recyclingleitung in Abhängigkeit von den relativen Werten einerseits des Durchsatzes ($m_R$), der effektiv nach stromabwärts der Druckleitung gesendet wird, und andererseits eines Schwellenwerts ($C_R$) regulieren können.

**25.** Anlage nach Anspruch 24, **dadurch gekennzeichnet, dass** die Durchsatzreguliermittel eine Regulierschleife des Recyclingdurchsatzes (BRR) aufweisen, die einen Sollwert ($C_R$) gleich dem Schwellendurchsatz, eine Messung ($m_R$), die dem Sofortwert des effektiv nach stromabwärts der Druckleitung gesendeten Durchsatz entspricht, sowie einen Ausgang ($s_R$) in Verbindung mit einem Öffnungs-Schließorgan, insbesondere einem Schieber (V), mit dem die Recyclingleitung (LR) versehen ist, besitzt.

**26.** Anlage nach einem der Ansprüche 16 bis 25 zum Umsetzen des Verfahrens nach Anspruch 15, **dadurch gekennzeichnet, dass** sie eine Leitung (LA) zum Einspritzen eines Zusatzgases mit einer im Wesentlichen höheren Temperatur als die des Gases, das in der Druckleitung zirkuliert, insbesondere mit Raumtemperatur aufweist, sowie Mittel zum Regulieren des Einspritzens (BRR'), die das Einspritzen dieses Zusatzgases in Abhängigkeit von den relativen Werten einerseits des Gasdurchsatzes ($m'_R$), der stromabwärts der Druckleitung zirkuliert, und andererseits von einem Schwellenwert ($c'_R$) regulieren können.

**27.** Anlage nach Anspruch 26, **dadurch gekennzeichnet, dass** die Einspritzreguliermittel eine Einspritzregulierschleife (BRR') aufweisen, die einen Sollwert ($c'_R$) gleich dem Wert des Schwellendurchsatzes, eine Messung ($m'_R$) gleich dem Sofortwert des Gasdurchsatzes, der stromabwärts der Druckleitung zirkuliert, sowie einen Ausgang ($s'_R$) in Verbindung mit einem Öffnungs-Schließorgan, insbesondere einem Schieber (V'), mit dem die Einspritzleitung (LA) versehen ist, besitzt.

28. Druckleitung, die mindestens einen kryogenen Zentrifugalkompressor ($CCC_1$ bis $CCC_4$) sowie eine Steueranlage des oder jedes Kompressors aufweist, **dadurch gekennzeichnet, dass** diese Steueranlage einem der Ansprüche 16 bis 27 entspricht.

29. Kühlanlage durch Sprühen eines verflüssigten Gases mit niedrigem Druck und niedriger Temperatur, insbesondere von Helium, die einen Behälter (5) aufweist, der das Zweiphasenfluid mit niedriger Temperatur und niedrigem Druck enthält, eine Einheit (1) zum Verflüssigen dieses Gases, eine Leitung zum Versorgen mit Zweiphasenflüssigkeit mit niedriger Temperatur und niedrigem Druck, versehen mit Mitteln (7, 13) zum Entspannen dieses verflüssigten Gases, die die Verflüssigungseinheit mit dem Behälter verbindet, und eine Leitung (15) zum Verdichten der gasförmigen Phase, die den Behälter mit der Verflüssigungseinheit verbindet, aufweist, **dadurch gekennzeichnet, dass** die Druckleitung (15) dem Anspruch 28 entspricht.

Fig.1

Fig.2

*Fig.3*

Fig.4

Fig.5

Fig.6

Fig.7

Fig.8

Fig.9

## RÉFÉRENCES CITÉES DANS LA DESCRIPTION

**Documents brevets cités dans la description**

- FR 2679635 A

- US 5499505 A